# FASCICULE DE BREVET EUROPEEN

(11) **EP 0 882 926 B1**
(45) Date de publication et mention de la délivrance du brevet: **09.07.2003**
(21) Numéro de dépôt: 98401300.3
(22) Date de dépôt: 29.05.1998
(51) Int. Cl.: F16L 33/22, F16L 25/00

(54) **Ensemble comprenant un tuyau souple annelé et un raccord rapide**
Einen gewellten Schlauch und eine Schnellverbindung aufweisende Anordnung
Assembly comprising a corrugated hose and a quick connector

(30) Priorité: 03.06.1997 FR 9706796
(43) Date de publication de la demande: 09.12.1998
(73) Titulaire: Sevylor International, 92130 Issy-les-Moulineaux (FR)
(72) Inventeur: Marbach, Gérard, 68700 Cernay (FR)
(74) Mandataire: Gorrée, Jean-Michel

(56) Documents cités:
- DE-A- 3 311 123
- DE-U- 9 011 944
- DE-U- 9 311 672
- FR-A- 2 385 969
- US-A- 4 729 583
- US-A- 4 904 002
- US-A- 5 042 152
- US-A- 5 080 405

## Description

L'invention concerne des perfectionnements apportés aux ensembles comprenant un tuyau souple annelé utilisés pour l'alimentation et l'évacuation de l'eau des piscines domestiques et un raccord rapide pour ce tuyau annelé, tel qu'énoncé dans le préambule de la revendication 1.

Le document US-A-4 729 583 décrit un ensemble de ce type. Toutefois, dans cet ensemble connu, la bague de serrage est elle-même conique de sorte que l'extrémité du tuyau annelé emmanché sur le manchon conique est écrasé et aplati entre les faces coniques coopérantes du manchon et de la bague. L'étanchéité d'un tel assemblage est largement tributaire de l'emmanchement initial, effectué manuellement, de l'extrémité du tuyau sur le manchon conique. Or, l'emmanchement initial peut s'avérer difficile à réaliser si le tuyau possède une trop grande souplesse ou au contraire une trop grande rigidité et/ou si la conicité du manchon est trop prononcée : si l'emmanchement initial est insuffisant, il peut en résulter des fuites malgré le serrage dû à la bague.

L'invention a essentiellement pour but de proposer un ensemble à raccord rapide qui soit efficace, fiable et de faible coût.

Un ensemble tel que précité se caractérise, étant agencé conformément à l'invention, en ce que le tuyau annelé comporte une extrémité munie d'un anneau unique isolé et d'une zone lisse s'étendant entre ledit anneau unique et la partie annelée du tuyau et en ce que la bague est propre à prendre appui, par son ouverture axiale, contre le susdit anneau unique de l'extrémité du tuyau,
de telle manière que, lorsque la bague est tournée sur l'embout dans le sens du serrage, son déplacement axial concomitant dans le sens des diamètres croissants de la portée conique de l'embout provoque l'entraînement axial du tuyau sur la portée conique de l'embout s'accompagnant du serrage et du blocage de l'extrémité du tuyau contre la portée conique.

On conçoit que le pincement de l'extrémité du tuyau entre la bague et la portée conique de l'embout est propre à assurer une étanchéité parfaite à l'eau, eu égard à la déformabilité relative et à l'écrasement relatif que peut supporter le matériau constitutif du tuyau (matière plastique). De plus, il en résulte un autoblocage de la bague.

En définitive, un raccord ainsi constitué est structurellement simple puisqu'il ne comporte que deux pièces composantes (l'embout et la bague) qui peuvent être fabriquées à moindre prix par moulage en matière plastique; l'utilisation en est simple et rapide.

Avantageusement, les moyens de guidage comprennent au moins une gorge prévue sur une portée de support de l'embout ou respectivement sur la face interne de la bague et au moins une saillie engagée dans la susdite gorge et prévue respectivement la face interne de la bague ou sur une portée de support de l'embout, ladite gorge étant au moins en partie inclinée par rapport à l'axe de l'embout ou de la bague ; on peut alors faire en sorte que la gorge et la saillie coopérantes forment des filetages complémentaires, ou bien aussi que la saillie soit conformée en doigt radial et que la gorge présente une portion terminale sensiblement perpendiculaire à l'axe de la bague, de manière à constituer un système de verrouillage du type baïonnette.

De préférence, la partie inclinée de la gorge est inclinée de façon notable par rapport à l'axe de l'embout pour définir une composante de déplacement axial rapide de la bague lors de sa rotation (rotation quart de tour, par exemple).

Dans un mode de réalisation préféré, la bague présente une ouverture axiale de grand diamètre et il lui est associé, intérieurement, une rondelle fendue ayant un diamètre intérieur qui est le susdit diamètre compris entre les diamètres extrêmes de la portée conique,
ce grâce à quoi c'est la rondelle fendue qui enserre élastiquement et bloque l'extrémité du tuyau sur la portée conique de l'embout lorsque la bague est tournée dans le sens du serrage. Un raccord ainsi agencé présente l'avantage d'accepter des tuyaux de diamètres extérieurs différents, tout en procurant une fixation étanche, efficace et fiable.

Le mode de réalisation selon lequel la bague est une pièce unique, monobloc, est certes le plus simple et semble devoir rencontrer le développement le plus large. Toutefois, au moins pour des domaines d'emploi spécifiques, on peut avoir recours à une bague constituée par deux demi-bagues solidarisables pour des moyens de liaisons diamétralement opposés ; en particulier les deux demi-bagues peuvent être réunies l'une à l'autre de façon articulée par une de leurs extrémités et les moyens de liaison sont prévus à leur extrémité diamétralement opposée, à la manière d'un bracelet ouvrant.

L'invention sera mieux comprise à la lecture de la description détaillée qui suit de certains modes de réalisations donnés uniquement à titre d'exemples non limitatifs. Dans cette description, on se réfère aux dessins annexés sur lesquels :
- la figure 1 est une vue latérale, en coupe, d'un raccord agencé conformément à l'invention ;
- la figure 2 est une vue en perspective de la bague du raccord de la figuré 1 ;
- la figure 3 est une vue latérale, en coupe, d'une variante du raccord de la figure 1 ;
- la figure 4 est une vue de dessus d'une rondelle fendue utilisée dans le raccord de la figure 3 ;
- la figure 5 est une vue latérale, en coupe, d'une autre variante de réalisation du raccord de la figure 1 ;
- la figure 6 est une vue de côté de la bague du raccord de la figure 5;
- les Figures 7 et 8 illustrent deux modes de réalisation possibles d'agencement pour une bague sous forme de deux prèces accouplables.

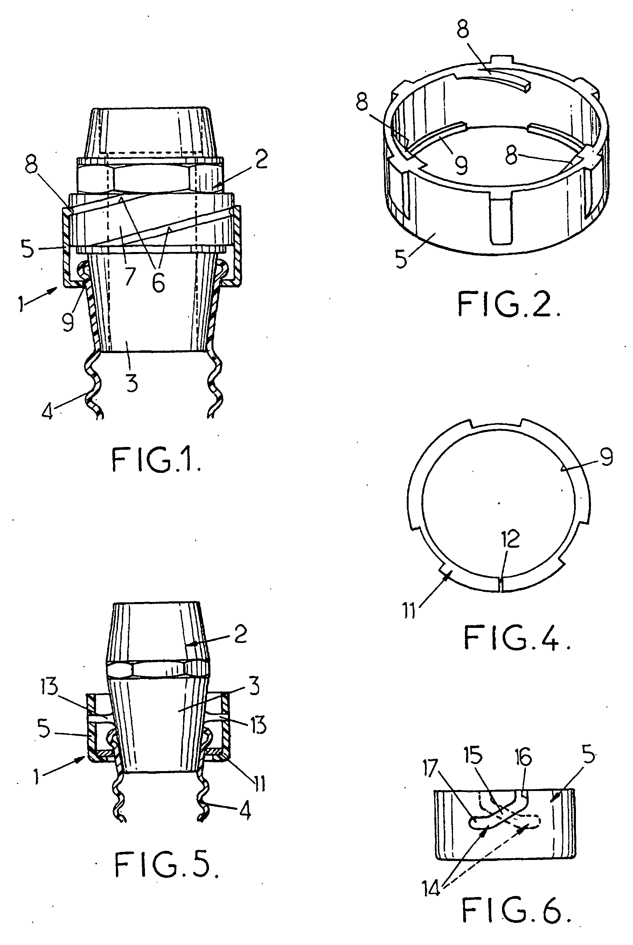

En se référant tout d'abord aux figures 1 et 2, le raccord 1 comprend un embout 2 présentant, à une de ses extrémités, une portée tubulaire conique 3 sur laquelle est emmanchable l'extrémité d'un tuyau souple 4.

Une bague de serrage 5 est montée à rotation sur l'embout 2, et des moyens de guidage sont prévus sur l'embout 2 et sur la bague 5 pour qu'une rotation de la bague 5 autour de l'embout 2 s'accompagne d'un déplacement axial de ladite bague sur l'embout. Dans l'exemple illustré aux figures 1 et 2, les moyens de guidage comprennent une ou plusieurs gorges 6 creusées sur une portée de support 7 de l'embout 2 et une ou plusieurs saillies 8, de forme complémentaire des gorges 6, portées par la face interne de la bague 5. Dans l'exemple représenté, les gorges 6 et les saillies 8 forment des filetages complémentaires qui sont notablement inclinés (par exemple 30° à 45°) par rapport à l'axe de l'embout de manière à obtenir un déplacement axial sensible de la bague pour une rotation relativement courte de celle-ci (par exemple vissage dit "quart de tour").

Enfin, l'extrémité de la bague 5 qui est située en regard de la portée conique 3 de l'embout 2 est munie d'une ouverture axiale 9 dont le diamètre est compris entre les diamètres extrêmes (minimum et maximum) de la portée conique 3. De préférence, en outre, le bord de l'ouverture situé vers l'intérieur de la bague est à bord vif ou relativement vif de façon à constituer un moyen d'ancrage comme cela apparaîtra plus loin.

Dans ces conditions, lorsque la bague est en position desserrée ou dévissée sur l'embout, un intervalle existe entre le contour de l'ouverture 9 de la bague et la portée conique 3. Cet intervalle peut laisser passage à un tuyau souple, par exemple en matière plastique, qui est emmanché sur l'embout conique 3. Puis, en faisant tourner la bague, celle-ci remonte axialement le long de l'embout jusqu'à ce que le bord vif de l'ouverture 9 viennent en appui contre la portée conique 3 en pinçant la paroi du tuyau souple. La déformabilité relative et l'écrasement relatif du matériau (matière plastique) du tuyau rend autoblocable le serrage de la bague et le tuyau 4 ne peut plus bouger axialement. En outre, ce serrage périphérique exercé sur le tuyau assure l'étanchéité de l'accouplement ainsi réalisé.

Par ailleurs, l'embout et la bague sont des pièces de formes simples, qui peuvent être fabriquées en très grande série et à moindre coût, par exemple par moulage en matière plastique.

On notera qu'au cours de la rotation de la bague et de son déplacement axial concommittant, lorsque le bord vif de l'ouverture 9 commence à coopérer positivement avec la paroi externe du tuyau 4, le tuyau se trouve entraîné axialement le long de la portée conique 3 et son emmanchement sur celle-ci est donc confirmé.

Cet effet d'entraînement axial se trouve renforcé lorsque le tuyau souple est de type annelé : comme illustré sur la figure 1, le bord de l'ouverture 9 prend appui sous le dernier anneau de l'extrémité du tuyau et le déplacement axial de la bague est alors positivement communiqué au tuyau.

Pour faciliter l'emploi du raccord 1 qui vient d'être décrit avec des tuyaux pouvant présenter des diamètres externes différents, il est préférable d'avoir recours à une variante de réalisation représentée aux figures 3 et 4. La bague 5 comporte une ouverture axiale 10 qui présente un diamètre plus grand que le diamètre 9 précédemment indiqué comme visible à la figure 3 (en pratique au moins égal au diamètre maximum de la portée conique), et une rondelle 11 est disposée à l'intérieur de la bague 5. Il s'agit d'une rondelle fendue en 12 (fig. 4), dont l'ouverture centrale constitue la susdite ouverture 9 ayant un diamètre compris entre les diamètres extrêmes de la portée conique 3. Grâce à cet agencement, c'est la rondelle 11 qui constitue l'organe de serrage du tuyau sur la portée conique et sa capacité de déformation radiale lui permet d'accepter des tuyaux de divers diamètres dans une fourchette prédéterminée, en même temps que l'élasticité ainsi acquise améliore le caractère autobloquant du serrage de la bague 5 sur la portée conique 3. La bague 5 joue alors le rôle d'organe de retenue et d'entraînement de la rondelle 11.

Bien entendu, les moyens de guidage peuvent être conçus de toute manière souhaitable selon les revendications, et ce qui a été explicité plus haut en regard des figures 1 et 2 n'a été donné qu'à titre d'exemple. Une disposition inversée (gorges 6 sur la paroi interne de la bague 5 et saillies 8 sur la portée de support 7 de l'embout 2) pourrait tout aussi bien être adoptée.

Aux figures 5 et 6 est illustré un agencement du type baïonnette, selon lequel l'embout 2 est muni d'un ou plusieurs (deux dans l'exemple représenté) doigts 13 saillant radialement qui sont engagés dans des gorges respectives 14 creusées dans la paroi latérale de la bague 5. Chaque gorge 14 présente un tronçon 15 sensiblement rectiligne qui est incliné par rapport à l'axe de la bague 5 et qui débouche dans le bord antérieur de la bague éventuellement par un court tronçon 16 parallèle à l'axe de la bague. Le tronçon 15 est suivi d'un tronçon terminal 17 sensiblement transversal à l'axe de la bague, qui correspondant à une position de verrouillage axial de la bague 5 serrée sur la portée conique 3.

Certains tuyaux, en particulier les tuyaux annelés, peuvent présenter un diamètre externe, au niveau des anneaux, qui est supérieur au diamètre de l'ouverture 9 de la bague 5 ou de la rondelle 11. Pour simplifier l'assemblage du tuyau et de la bague, il peut être intéressant de constituer la bague sous forme de deux pièces accouplables, de manière que les demi-bagues puissent être amenées sur le tuyau transversalement à celui-ci, alors qu'une bague monobloc ne pourrait pas être enfilée axialement sur son extrémité libre.

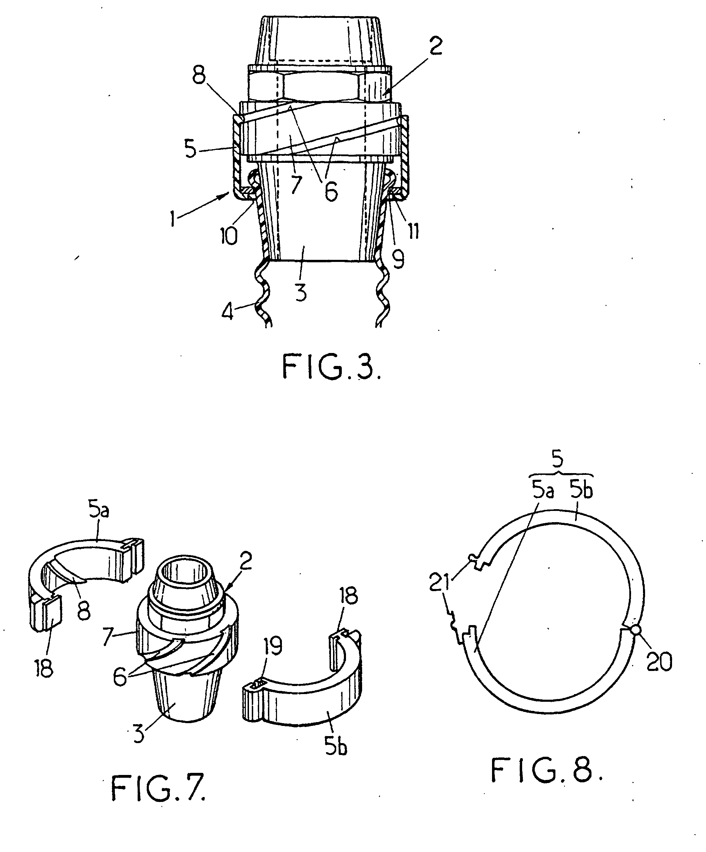

Les figures 7 et 8 illustrent deux modes de réalisation possibles d'un tel agencement.

A la figure 7, la bague 5 est constituée sous forme de deux demi-bagues 5a, 5b identiques dont les extrémités sont équipés de moyens de solidarisation à glissière, comportant chacun, d'un côté, un patin 18 profilé en T et, de l'autre, une gorge 19 en T complémentaire dudit patin 18. Les deux demi-bagues 5a, 5b sont rapprochées l'une de l'autre de part et d'autre de l'embout 2, en étant décalées axialement l'une par rapport à l'autre ; puis elles sont rapprochées l'une de l'autre axialement et les patins 18 sont introduits dans les gorges 19, en même temps que les saillies 8 sont amenées en regard des gorges 6 et pénètrent dans celles-ci.

La figure 8 montre en vue très schématique de dessus une bague 5 constituée sous forme d'un bracelet ouvrant dont les deux demi-bagues 5a, 5b, sont solidarisées et articulées l'une à l'autre en rotation en 20 par une de leur extrémité. A leur autre extrémité, des moyens d'accrochage 21 permettent de verrouiller les deux demi-bagues en position de fermeture.

Comme il va de soi et comme il résulte déjà de ce qui précède, l'invention ne se limite nullement à ceux de ses modes d'application et de réalisation qui ont été plus particulièrement envisagés ; elle en embrasse au contraire toutes les variantes selon les revendications.

## Revendications

1. Ensemble comprenant un tuyau souple annelé (4) propre à équiper une piscine et un raccord rapide pour ce tuyau souple annelé (4), le raccord rapide comportant :
- un embout tubulaire (2) présentant une portée conique axiale (3) propre à être emmanchée au moins en partie dans l'extrémité du tuyau (4),
- une bague de serrage (5) montée à rotation sur l'embout (2) et présentant, à son extrémité située en regard de la portée conique, une ouverture axiale (9) ayant un diamètre qui est compris entre les diamètres extrêmes de la portée conique (3),
- et des moyens de guidage (6, 8 ;13, 14) prévus sur l'embout (2) et sur la bague (5) agencés pour qu'une rotation de la bague s'accompagne d'un déplacement axial de celle-ci,
**caractérisé en ce que** le tuyau annelé comporte une extrémité munie d'un anneau unique isolé et d'une zone lisse s'étendant entre ledit anneau unique et la partie annelée du tuyau et **en ce que** la bague (5) est propre à prendre appui, par son ouverture axiale (9), contre le susdit anneau unique de l'extrémité du tuyau, de telle manière que, lorsque la bague est tournée sur l'embout dans le sens du serrage, son déplacement axial concomitant dans le sens des diamètres croissants de la portée conique de l'embout provoque l'entraînement axial du tuyau sur la portée conique de l'embout s'accompagnant du serrage et du blocage de l'extrémité du tuyau contre la portée conique.

2. Ensemble selon la revendication 1, **caractérisé en ce que** les moyens de guidage comprennent au moins une gorge (6 ; 14) prévue sur une portée de support (7) de l'embout (3) ou respectivement sur la face interne de la bague (5) et au moins une saillie (8 ; 13) engagée dans la susdite gorge et prévue respectivement sur la face interne de la bague (5) ou sur une portée de support de l'embout (2), ladite gorge étant au moins en partie inclinée par rapport à l'axe de l'embout ou de la bague.

3. Ensemble selon la revendication 2, **caractérisé en ce que** la gorge et la saillie coopérantes forment des filetages complémentaires.

4. Ensemble selon la revendication 2, **caractérisé en ce que** la saillie est conformée en doigt radial (13) et **en ce que** la gorge (14) présente une portion terminale (17) sensiblement perpendiculaire à l'axe de la bague formant fixation baïonnette.

5. Ensemble selon la revendication 2 ou 3, **caractérisé en ce que** la partie inclinée de la gorge est inclinée de façon notable par rapport à l'axe de l'embout pour définir une composante de déplacement axial sensible de la bague lors de sa rotation.

6. Ensemble selon l'une quelconque des revendications 1 à 5, **caractérisé en ce que** la bague (5) présente une ouverture axiale (10) de grand diamètre et **en ce qu'**il lui est associée, intérieurement, une rondelle (11) fendue (12) ayant un diamètre intérieur qui est le susdit diamètre compris entre les diamètres extrêmes de la portée conique,
ce grâce à quoi c'est la rondelle fendue qui enserre élastiquement et bloque l'extrémité du tuyau sur la portée conique de l'embout lorsque la bague est tournée dans le sens du serrage.

7. Ensemble selon l'une quelconque des revendications 1 à 6, **caractérisé en ce que** la bague (5) est constituée par deux demi-bagues (5a, 5b) solidarisables par des moyens de liaisons diamétralement opposés.

8. Ensemble selon la revendication 7, **caractérisé en ce que** les deux demi-bagues (5a, 5b) sont réunies l'une à l'autre de façon articulée (20) par une de leurs extrémités et **en ce que** les moyens de liaison (21) sont prévus à leur extrémité diamétralement opposée.

## Patentansprüche

1. Vorrichtung mit einem Wellschlauch (4), die geeignet ist, ein Schwimmbecken auszurüsten, sowie eine Schnellverbindung für diesen Wellschlauch (4), welche Schnellverbindung umfasst:
- ein röhrenförmiges Ansatzstück (2) mit einer konischen axialen Anlagefläche (3), die geeignet ist, zumindest teilweise in das Ende des Schlauchs (4) gesteckt zu werden;
- einen Spannring (5), der drehbar an das Ansatzstück (2) montiert ist und an seinem der konischen Anlagefläche gegenüberliegenden Ende eine Axialöffnung (9) mit einem Durchmesser umfasst, der zwischen den äußeren Durchmessern der konischen Anlagefläche (3) liegt,
- und Führungsmittel (6, 8; 13, 14), die am Ansatzstück (2) und am Ring (5) vorgesehen und so angeordnet sind, dass der Ring, wenn er gedreht wird, sich auch axial bewegt,
**dadurch gekennzeichnet, dass** der Wellschlauch ein mit einem einzigen, getrennten Reif und einer glatten Zone versehenes Ende aufweist, das sich zwischen dem einzigen Reif und dem gewellten Bereich des Schlauchs erstreckt, und dadurch, dass der Ring (5) geeignet ist, mit seiner Axialöffnung (9) an diesen einzigen Reif des Schlauchendes anzuliegen, sodass, wenn der Ring in Festziehrichtung auf das Ende gedreht wird, dessen gleichzeitige Axialbewegung in Richtung der sich vergrößernden Durchmesser der konischen Anlagefläche des Ansatzstücks eine axiale Mitnahme des Schlauchs auf die konische Anlagefläche des Ansatzstücks bewirkt, die mit dem Festziehen und Blockieren des Schlauchendes an der konischen Anlagefläche einhergeht.

2. Vorrichtung nach Anspruch 1, **dadurch gekennzeichnet, dass** die Führungsmittel mindestens eine Rille (6; 14) umfassen, die an einer Stützfläche (7) des Ansatzstücks (3) beziehungsweise an der Innenseite des Rings (5) vorgesehen ist, sowie mindestens einen Vorsprung (8; 13), der in die Rille eingeführt wird und jeweils an der Innenseite des Rings (5) beziehungsweise an einer Stützfläche des Ansatzstücks (2) vorgesehen ist, wobei die Rille zumindest teilweise zur Achse des Ansatzstücks oder des Rings geneigt ist.

3. Vorrichtung nach Anspruch 2, **dadurch gekennzeichnet, dass** die Rille und der Vorsprung, die zusammenwirken, komplementäre Gewinde bilden.

4. Vorrichtung nach Anspruch 2, **dadurch gekennzeichnet, dass** der Vorsprung in Form eines Radialfingers (13) vorgesehen ist, und dadurch, dass die Rille (14) einen Endbereich (17) aufweist, der im Wesentlichen quer zur Achse des Rings angeordnet ist, der eine Bajonettbefestigung bildet.

5. Vorrichtung nach Anspruch 2 oder 3, **dadurch gekennzeichnet, dass** der geneigte Bereich der Rille eine erhebliche Neigung bezüglich der Achse des Ansatzstücks aufweist, um eine wesentliche Axialverschiebungskomponente des Rings bei seiner Drehung zu definieren.

6. Vorrichtung nach einem der Ansprüche 1 bis 5, **dadurch gekennzeichnet, dass** der Ring (5) eine Axialöffnung (10) mit einem großen Durchmesser aufweist, und dass er innen eine Scheibe (11) mit einem Schlitz (12) aufweist, deren Innendurchmesser, welcher der vorgenannte Durchmesser ist, zwischen den äußeren Durchmessern der konischen Anlagefläche liegt, wodurch die geschlitzte Scheibe das Ende des Schlauchs an der konischen Anlagefläche des Ansatzstücks elastisch einspannt und blockiert, wenn der Ring in Spannrichtung gedreht wird.

7. Vorrichtung nach einem der Ansprüche 1 bis 6, **dadurch gekennzeichnet, dass** der Ring (5) aus zwei Halbringen (5a, 5b) besteht, die durch diametral entgegengesetzte Verbindungsmittel fest miteinander verbunden werden können.

8. Vorrichtung nach Anspruch 7, **dadurch gekennzeichnet, dass** die beiden Halbringe (5a, 5b) miteinander an einem ihrer Enden durch eine Gelenkverbindung (20) verbunden sind und dass die Verbindungsmittel (21) an ihrem diametral entgegengesetzten Ende vorgesehen sind.

## Claims

1. Assembly comprising a flexible ringered-type hose (4) adapted for the equipment of a swimming pool and a quick coupling for said flexible ringered-type hose (4), the quick coupling comprising :
- a tubular end fitting (2) which has an axial tapering surface (3) that can be pushed at least partially into the end of the hose (4),
- a clamping ring (5) mounted to rotate on the end fitting (2) and having, at its end facing the tapering surface, an axial opening (9) with a diameter that is between the extreme diameters of the tapering surface (3),
- and guide means (6, 8; 13, 14) provided on the end fitting (2) and on the ring (5), arranged so that rotation of the ring is accompanied by an axial movement thereof,
**characterized in that** the ringered-type hose includes an end provided with a single isolated ring and a smooth area extending between said single ring and the ringered part of the hose and **in that** the ring (5) is able to have its axial opening (9) resting against said single ring of the end of the hose, in such a manner that, when the ring is turned on the end fitting in the direction of tightening, its accompanying axial movement in the direction of the increasing diameters of the tapering surface of the end fitting induces said hose to be axially driven on the tapering surface of the end fitting, accompanied by the tightening and locking of the end of the hose against the tapering surface.

2. Assembly according to Claim 1, **characterized in that** the guide means comprise at least one groove (6; 14) provided on a support surface (7) of the end fitting (2), or respectively on the internal face of the ring (5) and at least one projection (8; 13) engaged in said groove and provided respectively on the internal face of the ring (5) or on a support surface of the end fitting (2), said groove being at least partially inclined with respect to the axis of the end fitting or of the ring.

3. Assembly according to Claim 2, **characterized in that** the interacting groove and projection form complementary screw threads.

4. Assembly according to Claim 2, **characterized in that** the projection is shaped as a radial finger (13) and **in that** the groove (14) has a terminal portion (17) which is substantially perpendicular to the axis of the ring (bayonet fastening).

5. Assembly according to Claim 2 or 3, **characterized in that** the inclined part of the groove is steeply inclined with respect to the axis of the end fitting in order to define a component of substantial axial movement of the ring as it is rotated.

6. Assembly according to anyone of Claims 1 to 5, **characterized in that** the ring (5) has a large-diameter axial opening (10) and **in that** associated with it, on the inside, is a washer (11) which is split (12) and has an inside diameter which is said diameter between the extreme diameters of the tapering surface, whereby it is the split washer which elastically traps and locks the end of the hose onto the tapering surface of the end fitting when the ring is turned in the tightening direction.

7. Assembly according to anyone of Claims 1 to 6, **characterized in that** the ring (5) consists of two half-rings (5a, 5b) that can be joined together by diametriccally opposed connecting means.

8. Assembly according to Claim 7, **characterized in that** the two half-rings (5a, 5b) are joined together in an articulated way (20) by one of their ends, and **in that** the connecting means (21) are provided at their diametrically opposed ends.
